# EUROPEAN PATENT SPECIFICATION

(11) **EP 2 985 658 B1**
(45) Date of publication and mention of the grant of the patent: **04.07.2018**
(21) Application number: 14774208.4
(22) Date of filing: 24.03.2014
(51) Int. Cl.: C08L 9/02, C08L 71/02, G03G 15/02, C08G 65/14, C08G 65/24, C08K 3/04

(54) **CROSSLINKABLE RUBBER COMPOSITION FOR CONDUCTIVE ROLLS, RUBBER CROSSLINKED MATERIAL FOR CONDUCTIVE ROLLS, AND CONDUCTIVE ROLL**
VERNETZBARE KAUTSCHUKZUSAMMENSETZUNG FÜR LEITFÄHIGE ROLLEN, KAUTSCHUKVERNETZTES MATERIAL FÜR LEITFÄHIGE ROLLEN UND LEITFÄHIGE ROLLE
COMPOSITION DE CAOUTCHOUC RÉTICULABLE POUR ROULEAUX CONDUCTEURS, MATÉRIAU RÉTICULÉ EN CAOUTCHOUC POUR ROULEAUX CONDUCTEURS, ET ROULEAU CONDUCTEUR

(30) Priority: 27.03.2013 JP 2013066130
(43) Date of publication of application: 17.02.2016
(73) Proprietor: Zeon Corporation, Tokyo 100-8246 (JP)
(72) Inventor: NIWA, Kazu, Tokyo 100-8246 (JP)
(74) Representative: Adam, Holger
(86) International application number: PCT/JP2014/057997
(87) International publication number: WO 2014/157045

(56) References cited:
- JP-A- 2003 043 785
- JP-A- 2004 170 713
- JP-A- 2004 240 402
- JP-A- 2005 234 329
- JP-A- 2005 326 755
- JP-A- 2008 292 659
- JP-A- 2012 022 193
- US-A1- 2004 096 247
- US-A1- 2012 014 723
- DATABASE WPI Week 200253 Thomson Scientific, London, GB; AN 2002-493845 XP002761896, & JP 2002 105246 A (NIPPON ZEON KK) 10 April 2002 (2002-04-10)
- DATABASE WPI Week 200615 Thomson Scientific, London, GB; AN 2006-140415 XP002761897, & JP 2006 028435 A (NIPPON ZEON KK) 2 February 2006 (2006-02-02)

## Description

### TECHNICAL FIELD

The present invention relates to a cross-linkable rubber composition for conductive roll, cross-linked rubber for conductive roll, and conductive roll.

### BACKGROUD ART

In the conduction mechanisms in printer, electronic photocopiers, facsimile machines, and other image forming devices, charging rolls for evenly charging photosensitive drums, toner feed rolls for conveying toner, development rolls which deposit toner on a photosensitive drum, transfer rollers for transferring a toner image from a photosensitive drum to paper, and other various conductive rolls are being used. Such conductive rolls are required to exhibit various performances in accordance with their applications.

As the material for forming such conductive rolls, a material comprised of a rubber ingredient in which carbon black is kneaded is known. For example, Patent Document 1 discloses a rubber composition comprised of at least one rubber ingredient selected from nitrile rubber, epichlorohydrin rubber, and ethylene oxide-propylene oxide-allylglycidyl ether ternary copolymer and carbon black kneaded into these rubber materials. However, Patent Document 1 has as its object to decrease the amount of fluctuation of the electrical resistivity value of the obtained conductive roll and the obtained conductive roll does not satisfy all of the requirements which are sought in a conductive roll, particularly in charging roll such as low hardness, low electrical resistivity value, and compression set resistance. Further, to lower the hardness, the rubber layer of the conductive roll had to be made foamed rubber.

Patent Document 2 discloses a rubber composition useful for producing a crosslinked product having a medium level of conductivity and the volume resistivity of which does not change according to the environmental changes. The crosslinked product has high electrical homogeneity.

Patent Document 3 discloses a semiconductive roller comprising: a roller body having an outer peripheral surface made of a crosslinked substance of a semiconductive rubber composition and exhibiting Shore A hardness of not more than 60, wherein
the semiconductive rubber composition contains a base polymer made of a mixture of:
(1) mixed rubber N of liquid nitrile rubber and solid nitrile rubber;
(2) chloroprene rubber C; and
(3) epichlorohydrin rubber E in a mass ratio (C+E)/N of 10/90 to 80/20, the ratios of the chloroprene rubber and the epichlorohydrin rubber in the total quantity of the base polymer are not less than 5 mass % and not less than 5 mass % respectively, and
roller resistance at an applied voltage of 5 V is not less than 10⁴ Ω and not more than 10⁹ Ω.

### PRIOR ART DOCUMENTS

### PATENT DOCUMENTS

Patent Document 1: Japanese Patent Publication No. 2008-216449A
Patent Document 2: Japanese Patent Publication No. 2002-493845
Patent Document 3: US 2012/0014723 A1

### SUMMARY OF THE INVENTION

### PROBLEM TO BE SOLVED BY THE INVENTION

The present invention was made in consideration of this actual situation and has as its object the provision of a cross-linkable rubber composition for conductive roll which can give cross-linked rubber which is low in hardness, low in volume resistivity value, and excellent in compression set resistance.

### MEANS FOR SOLVING THE PROBLEMS

The inventors engaged in intensive research to achieve the above object and as a result discovered that by using, as the rubber ingredients, the three ingredients of polyether rubber, solid nitrile rubber, and liquid nitrile rubber and adding to this a sulfur-containing cross-linking agent, disulfide-based cross-linking accelerator, and predetermined conductive carbon black, the obtained rubber composition can achieve the above object. The inventors consequently completed the present invention.

That is, according to the present invention, there is provided a cross-linkable rubber composition for conductive roll comprising a polyether rubber, solid nitrile rubber, liquid nitrile rubber which has a liquid state at ordinary temperature, sulfur-containing cross-linking agent, disulfide-based cross-linking accelerator, and conductive carbon black with an average primary particle size of 50 nm or less and with a BET specific surface area of 600 m²/g or more.

In the cross-linkable rubber composition of the present invention, preferably the polyether rubber contains cross-linkable oxirane monomer units which have a vinyl group, ethylene oxide monomer units, and epihalohydrin monomer units.

In the cross-linkable rubber composition of the present invention, preferably, in the total rubber ingredients, a ratio of content of the polyether rubber is 19 to 90 wt%, a ratio of content of the solid nitrile rubber is 9 to 80 wt%, and a ratio of content of the liquid nitrile rubber is 1 to 30 wt%.

In the cross-linkable rubber composition of the present invention, preferably the sulfur-containing compound is at least one compound which is selected from sulfur and sulfur-containing compounds which have morpholine structures.

In the cross-linkable rubber composition of the present invention, preferably the sulfur-containing compound which has a morpholine structure is a compound represented by the following general formula (1). 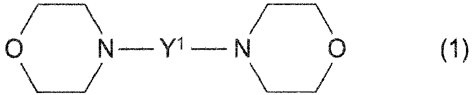 (in the general formula (1), Y¹ is a bivalent group which contains a sulfur atom).

In the cross-linkable rubber composition of the present invention, preferably the disulfide-based cross-linking accelerator is at least one compound which is selected from a thiuram disulfide-based cross-linking accelerator and thiazolyl disulfide-based cross-linking accelerator.

Further, according to the present invention, there are provided cross-linked rubber for conductive roll obtained by cross-linking the above described cross-linkable rubber composition and a conductive roll which is comprised of the cross-linked rubber.

### EFFECTS OF THE INVENTION

According to the present invention, there can be provided a cross-linkable rubber composition for conductive roll which can give cross-linked rubber which is low in hardness, low in volume resistivity value, and excellent in compression set resistance, cross-linked rubber for conductive roll which is obtained by cross-linking this, and a conductive roll which has the cross-linked rubber.

### DESCRIPTION OF EMBODIMENTS

The cross-linkable rubber composition for conductive roll of the present invention comprises a polyether rubber, solid nitrile rubber, liquid nitrile rubber which has a liquid state at ordinary temperature, sulfur-containing cross-linking agent, disulfide-based cross-linking accelerator, and conductive carbon black with an average primary particle size of 50 nm or less and with a BET specific surface area of 600 m²/g or more.

### <Polyether Rubber>

The polyether rubber used in the present invention is not particularly limited so long as rubber which has repeating units of oxyalkylene obtained by ring-opening polymerization of an oxirane monomer as main structural units. The type of the oxirane monomer is not particularly limited, but the polyether rubber used in the present invention preferably is one containing cross-linkable oxirane monomer units which have a vinyl group based on a cross-linkable oxirane monomer which has a vinyl group from the viewpoint of the solid nitrile rubber and liquid nitrile rubber being able to be cross-linked together.

As specific examples of the cross-linkable oxirane monomer which has a vinyl group, vinylglycidyl ether, allylglycidyl ether, butenylglycidyl ether, o-allylphenylglycidyl ether, and other ethylenically unsaturated glycidyl ethers; butadiene monoepoxide and other diene monoepoxides; glycidyl acrylate, glycidyl methacrylate, and other glycidyl esters of ethylenically unsaturated carboxylic acids; etc. may be mentioned. Among these as well, ethylenically unsaturated glycidyl ethers are preferable, and allylglycidyl ether is particularly preferable. The cross-linkable oxirane monomers which have a vinyl group may be used as single type alone or as two types or more combined.

In the polyether rubber used in the present invention, the ratio of content of the cross-linkable oxirane monomer units which have a vinyl group is preferably 1 to 15 mol% in the total monomer units of the polyether rubber, more preferably 2 to 12 mol%, furthermore preferably 3 to 10 mol%. If the ratio of content of the cross-linkable oxirane monomer units which have a vinyl group is too small, the obtained cross-linked rubber for conductive roll (below, sometimes referred to as the "cross-linked rubber") is liable to deteriorate in compression set, while conversely if too great, a gelation reaction etc. easily occurs during the polymerization reaction and the shapeability is liable to fall.

Further, the polyether rubber used in the present invention preferably contains, in addition to the cross-linkable oxirane monomer units which have a vinyl group, ethylene oxide monomer units based on an ethylene oxide monomer. The ratio of content of the ethylene oxide monomer units is preferably 40 to 80 mol% in the total monomer units of the polyether rubber, more preferably 45 to 75 mol%, furthermore preferably 50 to 70 mol%. If the ratio of content of the ethylene oxide monomer units is too small, the obtained cross-linked rubber is liable to become higher in volume resistivity value. On the other hand, if the ratio of content of the ethylene oxide monomer units is too great, when the obtained cross-linked rubber is used as a conductive roll, contamination of the photosensitive drum is liable to occur.

Further, the polyether rubber used in the present invention preferably contains, in addition to the cross-linkable oxirane monomer units which have a vinyl group and the ethylene oxide monomer units, epihalohydrin monomer units based on an epihalohydrin monomer.

As specific examples of epihalohydrin monomers, epichlorohydrin, epibromohydrin, epiiodohydrin, epifluorohydrin, etc. may be mentioned. Among these as well, epichlorohydrin is preferable. These epihalohydrin monomers may be used as single type alone or as two types or more combined.

In the polyether rubber used in the present invention, the ratio of content of the epihalohydrin monomer units is preferably 5 to 59 mol% in the total monomer units of polyether rubber, more preferably 13 to 53 mol%, furthermore preferably 20 to 47 mol%. If the ratio of content of the epihalohydrin monomer units is too small, when the obtained cross-linked rubber is used as a conductive roll, contamination of the photosensitive drum is liable to occur. On the other hand, if the ratio of content is too large, the obtained cross-linked rubber sometimes rises in volume resistivity value.

Further, the polyether rubber used in the present invention may contain, aside from the cross-linkable oxirane monomer units which have a vinyl group, ethylene oxide monomer units, and epihalohydrin monomer units, units of monomers which are copolymerizable with these.

As the copolymerizable monomers, for example, an alkylene oxide monomer other than the ethylene oxide monomer and the like can be used.

As specific examples of alkylene oxide monomers other than the ethylene oxide monomer, propylene oxide, 1,2-epoxybutane, 1,2-epoxyisobutane, 2,3-epoxybutane, 1,2-epoxyhexane, 1,2-epoxyoctane, 1,2-epoxydecane, 1,2-epoxytetradecane, 1,2-epoxyhexadecane, 1,2-epoxyoctadecane, 1,2-epoxyeicosene and other chain alkylene oxides; 1,2-epoxycyclopentane, 1,2-epoxycyclohexane, 1,2-epoxycyclododecane, and other cyclic alkylene oxides; etc. may be mentioned. These copolymerizable monomers may be used as single type alone or as two types or more combined.

In the polyether rubber used in the present invention, the ratio of content of these copolymerizable monomer units is preferably 30 mol% or less in the total monomer units of the polyether rubber, more preferably 20 mol% or less, furthermore preferably 10 mol% or less. If the ratio of content of these monomer units is too great, the obtained cross-linked rubber is liable to end up becoming greater in volume resistivity value.

The polyether rubber used in the present invention can, for example, be obtained by ring-opening polymerization of the above-mentioned monomers by the solution polymerization method or solvent slurry polymerization method etc.

The polymerization catalyst used for the polymerization is not particularly limited so long as a general catalyst for polyether polymerization. As the polymerization catalyst, for example, a catalyst causing water and acetylacetone to react with organoaluminum (Japanese Patent Publication No. 35-15797B2); a catalyst causing phosphoric acid and triethylamine to react with triisobutyl aluminum (Japanese Patent Publication No. 46-27534B2); a catalyst causing an organic acid salt of diazabicycloundecene and phosphoric acid to react with triisobutyl aluminum (Japanese Patent Publication No. 56-51171B2); a catalyst causing a partially hydrolyzed product of aluminum alkoxide and an organozinc compound to react (Japanese Patent Publication No. 43-2945B2); a catalyst causing an organozinc compound and polyvalent alcohol to react (Japanese Patent Publication No. 45-7751B2); a catalyst causing dialkylzinc and water to react (Japanese Patent Publication No. 36-3394B2); a catalyst causing tributyltin chloride and tributyl phosphate to react (Japanese Patent No. 3223978); etc. may be mentioned.

The polymerization solvent is not particularly limited so long as an inert solvent, but, for example, benzene, toluene, and other aromatic hydrocarbons; n-pentane, n-hexane, and other linear saturated hydrocarbons; cyclopentane, cyclohexane, and other cyclic saturated hydrocarbons; etc. may be used. Among these as well, when using the solution polymerization method for ring-opening polymerization, from the viewpoint of the solubility of the polyether rubber, aromatic hydrocarbons are preferable, while toluene is more preferable.

The polymerization reaction temperature is preferably 20 to 150°C, more preferably 50 to 130°C. The polymerization type may be the batch type, semibatch type, continuous type, or any other method.

The polyether rubber may be either a copolymer type of a block copolymer or random copolymer, but in particular when using ethylene oxide as a monomer, a random copolymer is preferable since it reduces the crystallinity of the polyethylene oxide more and makes the rubber elasticity more durable.

The method of recovering polyether rubber from the solvent can be to suitably combine the solidification, filtering, and drying in accordance with ordinary methods so as to obtain solid form polyether rubber.

The polyether rubber used in the present invention has a weight average molecular weight, converted to polystyrene using gel permeation chromatography, of preferably 200,000 to 2,000,000, more preferably 500,000 to 1,500,000. If the weight average molecular weight is too high, the Mooney viscosity becomes higher and the shapeability is liable to become poor. On the other hand, if the weight average molecular weight is too low, the obtained cross-linked rubber is liable to deteriorate in compression set.

The polyether rubber used in the present invention preferably has a Mooney viscosity (polymer Mooney viscosity ML₁₊₄, 100°C) of 20 to 120, more preferably 30 to 100. If the Mooney viscosity is too high, the shapeability becomes inferior and shaping for applications of conducive members becomes difficult, while if the Mooney viscosity is too low, the obtained cross-linked rubber is liable to fall in mechanical strength.

In the cross-linkable rubber composition for conductive roll of the present invention, the ratio of content of the polyether rubber is preferably 19 to 90 wt% in the total rubber ingredients, more preferably 29 to 90 wt%, furthermore preferably 39 to 70 wt%. If the ratio of content of the polyether rubber is too small, the obtained cross-linked rubber is liable to become high in hardness and volume resistivity value. On the other hand, if too great, the obtained cross-linked rubber is liable to fall in compression set resistance.

### <Solid Nitrile Rubber>

The solid nitrile rubber used in the present invention is an ethylenically unsaturated nitrile-conjugated diene-based copolymer rubber which has a solid state at ordinary temperature (is not fluid at ordinary temperature for a short time). The solid nitrile rubber used in the present invention has a polymer Mooney viscosity (ML₁₊₄, 100°C) which is measured based on JIS K6300 of usually 15 or more, preferably 15 to 150, more preferably 30 to 100.

The solid nitrile rubber used in the present invention usually is obtained by copolymerizing an ethylenically unsaturated nitrile monomer and conjugated diene monomer and other monomers copolymerizable with these which are used in accordance with need.

As the ethylenically unsaturated nitrile monomer, for example, acrylonitrile, methacrylonitrile, α-chloroacrylonitrile, α-methylacrylonitrile, α-methoxyacrylonitrile, α-ethoxyacrylonitrile, nitrile crotonate, nitrile cinnamate, dinitrile itaconate, dinitrile malate, dinitrile fumarate, etc. may be mentioned. Among these as well, acrylonitrile is preferable. These ethylenically unsaturated nitrile monomers may be used as single type alone or as two types or more combined. In the solid nitrile rubber, the ratio of content of the ethylenically unsaturated nitrile monomer units is preferably 10 to 60 wt% in the total monomer units, more preferably 15 to 40 wt%. If the ratio of content of the ethylenically unsaturated nitrile monomer units is in this range, the obtained cross-linked rubber becomes low in hardness.

As the conjugated diene monomer, for example, 1,3-butadiene, isoprene, 1,3-pentadiene, 1,3-hexadiene, 2,3-dimethylbutadiene, 4,5-diethyl-1,3-octadiene, 3-butyl-1,3-octadiene, chloroprene, 2,3-dichlorobutadiene, 1,3-cyclopentadiene, etc. may be mentioned. Among these as well, 1,3-butadiene is preferable. These conjugated diene monomers may be used as single type alone or as two types or more combined. In the solid nitrile rubber, the ratio of content of the conjugated diene monomer units is preferably 40 to 90 wt% in the total monomer units, more preferably 50 to 85 wt%.

As the other copolymerizable monomers, acrylic acid, methacrylic acid, crotonic acid, cinnamic acid, and other ethylenically unsaturated monocarboxylic acids; maleic acid, maleic anhydride, fumaric acid, itaconic acid, itaconic anhydride, citraconic acid, mesaconic acid, and other ethylenically unsaturated polyvalent carboxylic acids and their anhydrides; methyl acrylate, methyl methacrylate, ethyl acrylate, propyl acrylate, butyl acrylate, ethyl methacrylate, amyl acrylate, and other monoalkyl esters of ethylenically unsaturated monocarboxylic acid; diethyl maleate, dimethyl itaconate, dimethyl maleate, and other complete alkyl esters of ethylenically unsaturated polyvalent carboxylic acid; monoethyl maleate, monomethyl itaconate, monomethyl maleate, and other partial alkyl esters of ethylenically unsaturated polyvalent carboxylic acid; acrylamide, methacryl amide, crotonic acid amide, cinnamic acid amide, and other mono amides of ethylenically unsaturated monocarboxylic acids; styrene, α-methylstyrene, o-methylstyrene, m-methylstyrene, p-methylstyrene, p-t-butylstyrene, o-methoxystyrene, o-chlorostyrene, m-chlorostyrene, p-chlorostyrene, 1,1-diphenylethylene, N,N-dimethyl-p-aminostyrene, vinylpyridine, and other aromatic vinyl monomers; vinyl chloride, vinylidene chloride, vinyl acetate, allyl acetate, etc. may be mentioned. These other copolymerizable monomers may be used as single type alone or as two types or more combined. The ratio of content of the units of the other copolymerizable monomers is preferably 20 wt% or less, more preferably 15 wt% or less.

As the solid nitrile rubber used in the present invention, a solid acrylonitrile-butadiene rubber which is obtained by using an ethylenically unsaturated nitrile monomer constituted by acrylonitrile, using a conjugated diene monomer constituted by 1,3-butadiene, and if necessary using a monomer copolymerizable with these is preferable.

The method of production of the solid nitrile rubber is not particularly limited. The known emulsion polymerization method etc. can be used for production. After polymerization, the rubber is solidified and dried to obtain the solid nitrile rubber. Note that, the obtained solid nitrile rubber may also be hydrogenated nitrile rubber with hydrogen added to the carbon-carbon unsaturated bond parts in the rubber.

In the cross-linkable rubber composition for conductive roll in the present invention, the ratio of content of the solid nitrile rubber is preferably 9 to 80 wt% in the total rubber ingredients, more preferably 9 to 70 wt%, furthermore preferably 29 to 60 wt%. If the ratio of content of the solid nitrile rubber is too small, the obtained cross-linked rubber is liable to become higher in hardness, while if to great, the obtained cross-linked rubber is liable to become higher in volume resistivity value.

### <Liquid Nitrile Rubber>

The liquid nitrile rubber used in the present invention is ethylenically unsaturated nitrile-conjugated diene-based copolymer rubber which has a liquid state at ordinary temperature (has fluidity at ordinary temperature for a short time). Its weight average molecular weight, converted to polystyrene using gel permeation chromatography, is preferably 1,000 to 50,000, more preferably 3,000 to 30,000, furthermore preferably 3,000 to 15,000, Further, the liquid nitrile rubber used in the present invention has a polymer Mooney viscosity (ML₁₊₄, 100°C) which is measured based on JIS K6300 of usually 1 or less or cannot be measured for Mooney viscosity.

The liquid nitrile rubber used in the present invention is usually obtained by copolymerization of an ethylenically unsaturated nitrile monomer, a conjugated diene monomer, and other monomers copolymerizable with these which are used in accordance with need.

As the ethylenically unsaturated nitrile monomer, for example, ones similar to the above-mentioned solid nitrile rubber can be used, but among these, acrylonitrile is preferable. The ethylenically unsaturated nitrile monomer may be used as single type alone or as two types or more combined. In the liquid nitrile rubber, the ratio of content of the ethylenically unsaturated nitrile monomer units is preferably 10 to 60 wt% in the total monomer units, more preferably 15 to 50 wt%.

As the conjugated diene monomer, for example, ones similar to the above-mentioned solid nitrile rubber can be used, but among these, 1,3-butadiene is suitable. The conjugated diene monomers may be used as single type alone or as two types or more combined. In the liquid nitrile rubber, the ratio of content of the conjugated diene monomer units is preferably 40 to 90 wt% with respect to the total monomer units, more preferably 50 to 85 wt%.

As the other copolymerizable monomers, for example, ones similar to the above-mentioned solid nitrile rubber may be used. The other copolymerizable monomers may be used as single type alone or as two types or more combined. The ratio of content of units of other copolymerizable monomers is preferably 20 wt% or less, more preferably 15 wt% or less.

As the liquid nitrile rubber used in the present invention, liquid acrylonitrile-butadiene rubber which is obtained by using an ethylenically unsaturated nitrile monomer constituted by acrylonitrile, using a conjugated diene monomer constituted by 1,3-butadiene, and using other monomers copolymerizable with these in accordance with need is preferable.

The method of production of the liquid nitrile rubber is not particularly limited. The known emulsion polymerization method etc. can be used for production. To adjust the molecular weight of the polymer to a relatively low one, it is preferable that a chain transfer agent or other molecular weight adjuster is suitably used at the time of polymerization. As the chain transfer agent, t-dodecylmercaptan etc. may be mentioned. Note that, after polymerization, hydrogen may be added to the carbon-carbon unsaturated bond parts of the liquid nitrile rubber.

In the cross-linkable rubber composition for conductive roll of the present invention, the ratio of content of the liquid nitrile rubber is preferably 1 to 30 wt% with respect to the total rubber ingredients, more preferably 1 to 20 wt%, furthermore preferably 1 to 10 wt%. If the ratio of content of the liquid nitrile rubber is too small, the obtained cross-linked rubber is liable to become higher in hardness, while if too great, the obtained cross-linked rubber is liable to fall in compression set resistance.

Furthermore, the cross-linkable rubber composition for conductive roll of the present invention may contain as rubber ingredients, in a range not detracting from the effect of the present invention, as desired another rubber besides the above-mentioned polyether rubber, solid nitrile rubber, and liquid nitrile rubber. As the other rubber, for example, butadiene rubber, styrene-butadiene rubber, isoprene rubber, natural rubber, ethylene-propylene rubber, polyurethane rubber, acrylic rubber, fluororubber, silicone rubber, etc. may be mentioned. If containing this other rubber, these rubber may be used as single type alone or as two types or more combined.

### <Sulfur-Containing Cross-Linking Agent>

The sulfur-containing cross-linking agent used in the present invention is not particularly limited so long as one which contains a sulfur atom and can cross-link the above-mentioned rubber ingredients, but at least one sulfur-containing compound which is selected from sulfur and sulfur-containing compound which has a morpholine structure is preferable from the viewpoint that the rubber ingredients constitute by the polyether rubber, solid nitrile rubber, and liquid nitrile rubber can be cross-linked together. As specific examples of the sulfur, powder sulfur, precipitated sulfur, colloidal sulfur, insoluble sulfur, and high dispersion sulfur, etc. may be mentioned. As sulfur-containing compound which has a morpholine structure, for example, a compound expressed by the following general formula (1) which contain a morpholine ring and sulfur atom etc. may be mentioned. These sulfur-containing cross-linking agents may be used as single type alone or as two types or more combined. 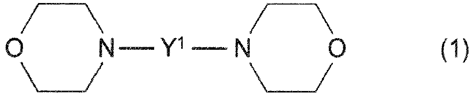 (in which general formula (1), Y¹ is a bivalent group which contains a sulfur atom)

Note that, in the general formula (1), Y¹ is not particularly limited so long as a group which contains a sulfur atom and connects two morpholine structures, but as the sulfur-containing compound which has a morpholine structure, a compound in which Y¹ is a specific bivalent group which contains a sulfur atom, that is, a compound expressed by the following general formula (2) or a compound expressed by the following general formula (3), is more preferable, while a compound expressed by the following general formula (2) is particularly preferable.

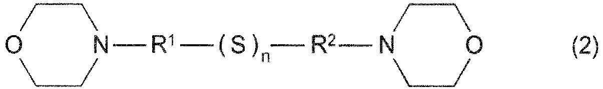

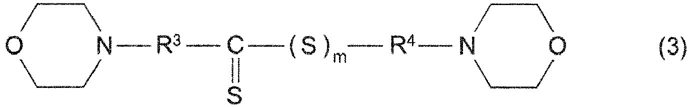

In the above general formula (2), R¹ and R² respectively independently are chemical single bonds or alkylene groups having 1 to 10 carbon atoms, preferably chemical single bonds or alkylene groups having 1 to 3 carbon atoms, more preferably chemical single bonds. Both R¹ and R² being chemical single bonds is particularly preferable. That is, among the compounds expressed by the above general formula (2), a compound expressed by the following general formula (4) is particularly preferable. Further, in the above general formula (2) (and the following general formula (4)), "n" is preferably an integer of 1 to 5. An integer of 2 to 4 is preferable, while n=2 is particularly preferable.

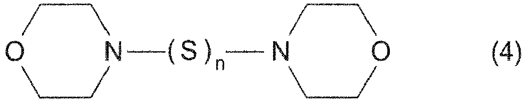

Further, in the above general formula (3), R³ and R⁴ are respectively independently chemical single bonds or alkylene groups having 1 to 10 carbon atoms, preferably chemical single bonds or alkylene groups having 1 to 3 carbon atoms, more preferably chemical single bonds. Both R³ and R⁴ being chemical single bonds is particularly preferable. Further, in the above general formula (3), "m" is an integer of 1 to 5, 1 or 2 is preferable, and m=1 is particularly preferable. That is, among the compounds expressed by the above general formula (3), a compound expressed by the following formula (5) is particularly preferable.

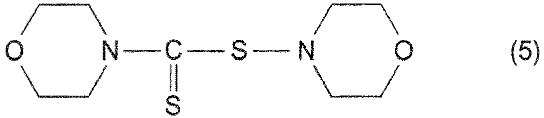

As specific examples of the sulfur-containing compound which has a morpholine structure, 4,4'-dithiodimorpholine (compound of the above general formula (4) where n=2), 4,4'-tetrathiodimorpholine (compound of the above general formula (4) where n=4), morpholinodithioformic acid-4-morpholinyl (compound of the above formula (5)), etc. may be mentioned. Among these, 4,4'-dithiodimorpholine is particularly preferable.

In the cross-linkable rubber composition for conductive roll of the present invention, the amount of the sulfur-containing cross-linking agent is preferably 0.1 to 10 parts by weight with respect to 100 parts by weight of the total rubber ingredients, more preferably 0.2 to 7 parts by weight, further preferably 0.3 to 5 parts by weight. If the amount of the cross-linking agent is too small, the cross-linking speed becomes slow and the obtained cross-linked rubber is liable to fall in productivity or, when the cross-linked rubber is used polished, the polishability is liable to fall. On the other hand, if too great, the obtained cross-linked rubber may become higher in hardness or the cross-linking agent may bloom.

### <Disulfide-Based Cross-Linking Accelerator>

The disulfide-based cross-linking accelerator used in the present invention is not particularly limited so long as it has a disulfide structure (-S-S-) and acts as a cross-linking accelerator in combination with the sulfur-containing cross-linking agent, but at least one disulfide-based cross-linking accelerator which is selected from a thiuram disulfide-based cross-linking accelerator and thiazolyl disulfide-based cross-linking accelerator is preferable. By using a thiuram disulfide-based cross-linking accelerator and/or thiazolyl disulfide-based cross-linking accelerator, the obtained cross-linked rubber becomes suitably lower in volume resistivity value. As specific examples of a thiuram disulfide-based cross-linking accelerator, tetramethylthiuram disulfide, tetraethylthiuram disulfide, tetrabutylthiuram disulfide, tetrapentamethylenethiuram disulfide, tetrabenzylthiuram disulfide, tetrakis(2-ethylhexyl)thiuram disulfide, etc. may be mentioned. As specific examples of a thiazolyl disulfide-based cross-linking accelerator, dibenzothiazolyl disulfide etc. may be mentioned. These disulfide-based cross-linking accelerators may be used as single type alone or as two types or more combined. Among these as well, tetraethylthiuram disulfide and dibenzothiazolyl disulfide are preferable.

Further, in the present invention, as a cross-linking accelerator, a disulfide-based cross-linking accelerator may be used. But when jointly using a cross-linking accelerator other than a disulfide-based cross-linking accelerator, that is, a cross-linking accelerator which does not have a disulfide structure, the obtained cross-linked rubber tends to become higher in volume resistivity value, so it is preferable to not use a cross-linking accelerator other than a disulfide-based cross-linking accelerator.

In the cross-linkable rubber composition for conductive roll of the present invention, the amount of the disulfide-based cross-linking accelerator is preferably 0.01 to 15 parts by weight with respect to 100 parts by weight of the total rubber ingredients, more preferably 0.1 to 10 parts by weight, furthermore preferably 0.5 to 5 parts by weight. If the amount of the disulfide-based cross-linking accelerator is too great, the cross-linking speed becomes too fast or the blooming is liable to occur at the surface of the cross-linked rubber. On the other hand, if too small, the obtained cross-linked rubber is liable to become higher in volume resistivity value.

### <Conductive Carbon Black>

The conductive carbon black used in the present invention is a carbon material with an average primary particle size of 50 nm or less and with a BET specific surface area of 600 m²/g or more which exhibits conductivity. By using such conductive carbon black combined with the above-mentioned ingredients, the obtained cross-linked rubber can be suitably lowered in volume resistivity value.

The conductive carbon black which is used in the present invention has an average primary particle size of 50 nm or less, preferably 45 nm or less, more preferably 40 nm or less. The lower limit of the average primary particle size is not particularly limited, but is usually 10 nm or more. If the average primary particle size exceeds 50 nm, the obtained cross-linked rubber ends up becoming higher in volume resistivity value and becoming unsuitable for conductive roll applications, in particular charging roll applications.

Further, the conductive carbon black used in the present invention not only has an average primary particle size in the above range, but also has a BET specific surface area of 600 m²/g or more, preferably 650 m²/g or more, more preferably 700 m²/g or more. The upper limit of the BET specific surface area is not particularly limited, but is usually 1,600 m²/g or less. If the BET specific surface area is less than 600 m²/g, the obtained cross-linked rubber becomes higher in volume resistivity value and ends up becoming unsuitable for conductive roll applications, in particular charging roll applications.

The conductive carbon black used in the present invention is not particularly limited so long as a conductive one with an average primary particle size and BET specific surface area in the above ranges, but from the viewpoint of lowering the volume resistivity value more, conductive carbon black in which the primary particles are hollow shell shaped particles, the primary particles have a porosity of 50% or more, and such primary particles secondarily aggregate is preferable. As specific examples of the conductive carbon black used in the present invention, "Ketjen Black EC", "Ketjen Black EC300", and "Ketjen Black EC600JD" (above made by Lion) etc. may be mentioned.

In the cross-linkable rubber composition for conductive roll in the present invention, the amount of the conductive carbon black is preferably 3 to 10 parts by weight with respect to 100 parts by weight of the total rubber ingredients, more preferably 4 to 9 parts by weight, furthermore preferably 5 to 8 parts by weight. If the amount of the conductive carbon black is too small, the obtained cross-linked rubber is liable to end up becoming too high in volume resistivity value. On the other hand, if too great, the obtained cross-linked rubber is liable to end up becoming higher in hardness.

### <Other Compounding Agents>

Further, the cross-linkable rubber composition for conductive roll of the present invention may contain a cross-linking accelerator in addition to the above ingredients.

As the cross-linking accelerator, for example, zinc oxide, stearic acid, etc. may be mentioned.

The amount of the cross-linking accelerator is preferably 0.01 to 15 parts by weight with respect to 100 parts by weight of the total rubber ingredients, more preferably 0.1 to 10 parts by weight, furthermore preferably 0.5 to 5 parts by weight. If the content of the cross-linking accelerator is in the above range, the cross-linking sufficiently proceeds and the obtained cross-linked rubber becomes excellent in mechanical properties.

Furthermore, the cross-linkable rubber composition for conductive roll of the present invention may contain, other than the above-mentioned ingredients, other known additives which are usually mixed into rubber. Such additives are not particularly limited, but, for example, a reinforcing agent; acid acceptor; anti-aging agent; ultraviolet absorber; photo stabilizer; tackifier, surfactant; electrolyte; coloring agent (dye or pigment); flame retardant; antistatic agent; etc. may be mentioned.

The cross-linkable rubber composition for conductive roll of the present invention can be prepared by mixing and kneading, using the desired method, the above-mentioned polyether rubber, solid nitrile rubber, liquid nitrile rubber, sulfur-containing cross-linking agent, disulfide-based cross-linking accelerator, and conductive carbon black and the various additives and other rubber which are used in accordance with need. For example, it is possible to mix the polyether rubber, solid nitrile rubber, and liquid nitrile rubber, as the rubber ingredients, knead into the obtained rubber mixture the various ingredients other than the sulfur-containing cross-linking agent and disulfide-based cross-linking accelerator, then knead into the obtained kneaded product the sulfur-containing cross-linking agent and disulfide-based cross-linking accelerator so as to obtain the cross-linkable rubber composition for conductive roll of the present invention. At the time of mixing and kneading, for example, a kneader, Banbury mixer, open rolls, calendar rolls, extruder, or any other kneading machine may be used alone or in combination to knead and shape the material. The kneading temperature of the kneaded rubber product and various ingredients other than the sulfur-containing cross-linking agent and disulfide-based cross-linking accelerator is preferably 20 to 200°C, more preferably 20 to 150°C, the kneading time is preferably 30 seconds to 30 minutes, further, the kneading temperature of the obtained kneaded product and the sulfur-containing cross-linking agent and disulfide-based cross-linking accelerator is preferably 100°C or less, more preferably 0 to 80°C, and the kneading time is preferably 30 seconds to 20 minutes.

Further, in the present invention, when mixing the polyether rubber, solid nitrile rubber, and liquid nitrile rubber, as the rubber ingredients, it is possible to use the method of first mixing, in a solvent, the polyether rubber and liquid nitrile rubber which are dissolved in a solvent, then performing steam stripping etc. to cause them to solidify to thereby obtain a solid form mixture of polyether rubber and liquid nitrile rubber and mix and knead the solid nitrile rubber to the obtained solid form mixture. In particular, according to such a method, it is possible to reduce the contamination of the photosensitive drum in the case of use of the obtained cross-linked rubber for applications of conductive rolls used in image forming apparatuses etc.

### <Cross-Linked Rubber for Conductive Roll>

The cross-linked rubber for conductive roll of the present invention is one obtained by cross-linking the above-mentioned cross-linkable rubber composition for conductive roll of the present invention.

The method of cross-linking the cross-linkable rubber composition for conductive roll of the present invention is not particularly limited. The shaping and cross-linking may be performed simultaneously or the cross-linking may be performed after shaping. The temperature at the time of shaping is preferably 20 to 200°C, more preferably 40 to 180°C. The heating temperature at the time of cross-linking is preferably 130 to 200°C, more preferably 140 to 200°C. If the temperature at the time of cross-linking is too low, a long cross-linking time is necessary and the obtained cross-linked rubber is liable to become lower in cross-linking density. On the other hand, if the temperature at the time of cross-linking is too high, poor shaping is liable to occur. The cross-linking time differs depending on the cross-linking method, cross-linking temperature, shape, etc., but a range of 1 minute or more and 5 hours or less is preferable from the viewpoint of the cross-linking density and production efficiency. As the heating method, press heating, oven heating, steam heating, hot air heating, microwave heating, etc. may be suitably selected.

Further, depending on the shape, size, etc. of the cross-linked rubber, sometimes even if the surface is cross-linked, the inside may not be sufficiently cross-linked, so the rubber may be further heated for secondary cross-linking. When performing secondary cross-linking, the heating temperature is preferably 100 to 220°C, more preferably 130 to 210°C. The heating time is preferably 30 minutes to 5 hours.

The thus obtained cross-linked rubber for conductive roll of the present invention is obtained using the above-mentioned cross-linkable rubber composition for conductive roll of the present invention, so is low in hardness, low in volume resistivity value, and excellent in compression set resistance. For this reason, the cross-linked rubber for conductive roll of the present invention, making use of such properties, can be suitably used as conductive rolls which are used in printers, electronic photocopiers, facsimile machines, and other image forming devices, specifically, charging rolls, toner feed rolls, development rolls, and transfer rolls. The cross-linked rubber of the present invention has a volume resistivity value in a measurement environment of a temperature of 23°C and a humidity of 50% when making the applied voltage 10V and making the volume resistivity value 30 seconds after start of application of voltage a low one of preferably 1×10^{6.0}Ω·cm or less, so is suitable for applications as charging rolls.

### EXAMPLES

Below, examples and comparative examples will be given to explain the present invention more specifically, but the present invention is not limited to these examples. Below, the "parts" are based on weight. The test or evaluation methods for different physical properties and characteristics are as follows.

### [Mooney Viscosity]

The Mooney viscosity (ML₁₊₄, 100°C) was measured in accordance with JIS K6300 at 100°C.

### [Hardness]

The cross-linkable rubber composition was press formed at a temperature of 170°C for 20 minutes to shape and cross-link it, then was secondarily cross-linked under conditions of a temperature of 150°C and four hours so as to obtain a diameter 29 mm, height 12.7 mm columnar shaped cross-linked rubber. Further, the obtained columnar shaped cross-linked rubber was used in accordance with JIS K6253 to measure the hardness using a Type A Durometer.

### [Volume Resistivity Value (23°C, 50% RH)]

The cross-linkable rubber composition was shaped and cross-linked by a press at a temperature of 170°C for 20 minutes, then was secondarily cross-linked under conditions of a temperature of 150°C and 4 hours to thereby obtain a vertical 15 cm, horizontal 15 cm, thickness 2 mm sheet shaped cross-linked rubber. Further, the obtained sheet shaped cross-linked rubber was used based on the double ring electrode method of JIS K6271 under conditions of a temperature of 23°C, a humidity of 50%, and an applied voltage of 10V to measure the volume resistivity value after 30 seconds from the start of application of voltage. The smaller the numerical value of the volume resistivity value, the better the conductivity.

### [Compression Set]

The cross-linkable rubber composition was press formed at a temperature of 170°C for 20 minutes and cross-linked, then was secondarily cross-linked under conditions of a temperature of 150°C for 4 hours to obtain a diameter 29 mm, height 12.7 mm columnar shaped cross-linked rubber. Further, in accordance with JIS K6262, the obtained cross-linked rubber was compressed 25%. In that state, it was allowed to stand in an environment of a temperature of 70°C for 22 hours, then the compression was released and the compression set was measured. The smaller the value of the compression set, the more resistant the material to deformation and therefore the better.

### [Production Example 1, Preparation of Catalyst Solution]

A sealed pressure-resistant glass bottle was substituted with nitrogen and charged with toluene 184.8 parts and triisobutylaluminum 55.2 parts. The glass bottle was immersed in ice water to cool it, then diethylether 103.1 parts was added to the glass bottle and the mixture stirred. Next, the glass bottle was continued to be cooled by ice water while adding phosphoric acid 8.18 parts and the mixture was further stirred. At this time, the reaction between the triisobutyl aluminum and phosphoric acid caused the internal pressure of the glass bottle to rise, so depressurization was performed at a suitable time. Next, the glass bottle was further charged with a formic acid salt of 1,8-diazabicyclo(5,4,0)undecene-7, 8.27 parts, then finally the bottle was placed in a 60°C warm water tank and an aging reaction was performed for 1 hour to obtain the catalyst solution.

### [Production Example 2, Production of Polyether Rubber]

An autoclave was charged with epichlorohydrin 212.4 parts, allylglycidyl ether 26.2 parts, ethylene oxide 18.4 parts, and toluene 2053.8 parts. The mixture was stirred in a nitrogen atmosphere while raising the temperature of the inside solution to 70°C, then the above-prepared catalyst solution 10 parts was added and the reaction started. Next, from right after the start of reaction, a solution of ethylene oxide 123.0 parts dissolved in toluene 287.0 parts was continuously added over 5 hours at an equal speed. At the same time, the above prepared catalyst solution was added every 30 minutes in 7 parts each over 5 hours. After that, water 15 parts was added to the reaction system and stirred, whereby the reaction was made to end and furthermore the antiaging agent constituted by 4,4'-thiobis-(6-tert-butyl-3-methylphenol) 5 wt% toluene solution 38 parts was added and stirred. Next, steam stripping was performed to remove the toluene. The supernatant water was removed, then the result was dried at 60°C for 15 hours in vacuo to obtain 361.0 parts of polyether rubber. The obtained polyether rubber had a Mooney viscosity of 45. Further, as a result of ¹H-NMR analysis, it could be confirmed that the monomer composition ratio of the obtained polyether rubber was ethylene oxide monomer units 56 mol%, epichlorohydrin monomer units 40 mol%, and allylglycidyl ether monomer units 4 mol%.

### [Example 1]

A stirring container which was provided with a stirring rotor was charged with 100 parts of the polyether rubber which was obtained in Production Example 2 and acetone 900 parts. The mixture was stirred at 23°C for 12 hours to obtain polyether rubber in a 10 wt% acetone solution. Further, a stirring container separate from the above was charged with the obtained polyether rubber in a 10 wt% acetone solution 900 parts (converted to polyether rubber: 90 parts) and liquid nitrile rubber (acrylonitrile-butadiene rubber (acrylonitrile: 29.5 wt%), product name "Nipol 1312", made by Zeon Corporation) 10 parts. The mixture was stirred at 40°C for 2 hours to thereby obtain a rubber solution comprised of an acetone solution of polyether rubber and liquid nitrile rubber dissolved and mixed with each other. Next, the obtained rubber solution comprised of the acetone solution of the polyether rubber and liquid nitrile rubber was steam stripped then was filtered from the slurry to obtain a rubber ingredient, and the obtained rubber ingredient was dried at 60°C for 15 hours to obtain 100 parts of a mixture of polyether rubber and liquid nitrile rubber (polyether rubber:liquid nitrile rubber =90:10 (weight ratio)).

Further, a Banbury mixer was charged with the above obtained mixture of polyether rubber and liquid nitrile rubber 60 parts, solid nitrile rubber (acrylonitrile-butadiene rubber, product name "Nipol DN401LL", made by Zeon Corporation, acrylonitrile: 18 wt%) 40 parts, conductive carbon black (product name "Ketjen Black EC300", made by Lion, average primary particle size: 40 nm, BET specific surface area: 800 m²/g) 7 parts, a cross-linking accelerator constituted by stearic acid 1 part, and a cross-linking accelerator constituted by zinc oxide (product name "ZnO#1", made by Seido Chemical Industry) 5 parts. The mixture was kneaded at 50°C for 5 minutes, then the kneaded product was discharged from the Banbury mixer. Next, the 50°C open rolls were charged with this kneaded product, a sulfur-containing cross-linking agent constituted by 4,4-dithiodimorpholine (product name "Vulnoc R", made by Ouchi Shinko Chemical Industrial) 2 parts, a disulfide-based cross-linking accelerator constituted by tetraethylthiuram disulfide (product name "Nocceler TET", made by Ouchi Shinko Chemical Industrial) 1 part, and a disulfide-based cross-linking accelerator constituted by dibenzothiazole disulfide (product name "Nocceler DM-P", made by Ouchi Shinko Chemical Industrial) 1.5 parts and stirred for 10 minutes to obtain a cross-linkable rubber composition. Further, the obtained cross-linkable rubber composition was used in accordance with the above methods to measure and evaluate the volume resistivity value, hardness, and compression set. The results are shown in Table 1.

### [Example 2]

Except for changing the content of the sulfur-containing cross-linking agent constituted by 4,4-dithioxy morpholine from 2 parts to 1 part and further mixing in a sulfur-containing cross-linking agent constituted by sulfur (product name "Sulfax PMC", made by Tsurumi Chemical Industry) 0.25 part, the same procedure was followed as in Example 1 to obtain a cross-linkable rubber composition and the same procedure was followed to measure and evaluate it. The results are shown in Table 1.

### [Example 3]

Except for not mixing in a disulfide-based cross-linking accelerator constituted by tetraethylthiuram disulfide, the same procedure was followed as in Example 1 to obtain a cross-linkable rubber composition and the same procedure was followed to measure and evaluate it. The results are shown in Table 1.

### [Example 4]

Except for not mixing in a disulfide-based cross-linking accelerator constituted by dibenzothiazolyl disulfide, the same procedure was followed as in Example 1 to obtain a cross-linkable rubber composition and the same procedure was followed to measure and evaluate it. The results are shown in Table 1.

### [Comparative Example 1]

Except for using, instead of conductive carbon black (product name "Ketjen Black EC300", made by Lion) 7 parts, carbon black (product name "Asahi #35", made by Asahi Carbon, average primary particle size: 78 nm, BET specific surface area: 24 m²/g) 7 parts, the same procedure was followed as in Example 1 to obtain a cross-linkable rubber composition and the same procedure was followed to measure and evaluate it. The results are shown in Table 1.

### [Comparative Example 2]

Except for changing the amount of the carbon black (product name "Asahi #35", made by Asahi Carbon) from 7 parts to 30 parts, the same procedure was followed as in Comparative Example 1 to obtain a cross-linkable rubber composition and the same procedure was followed to measure and evaluate it. The results are shown in Table 1.

### [Comparative Example 3]

Except for directly charging into a Banbury mixer, instead of the rubber ingredient constituted by a mixture of polyether rubber and liquid nitrile rubber 60 parts, the polyether rubber which was obtained in Production Example 2, 95 parts and liquid nitrile rubber 5 parts and for not mixing in a rubber ingredient constituted by a solid nitrile rubber, the same procedure was followed as in Example 1 to obtain a cross-linkable rubber composition and the same procedure was followed to measure and evaluate it. That is, in Comparative Example 3, as the rubber ingredient, solid nitrile rubber was not mixed, and only polyether rubber and liquid nitrile rubber were mixed. The results are shown in Table 1.

### [Comparative Example 4]

Except for directly charging into a Banbury mixer, instead of the rubber ingredient constituted by a mixture of polyether rubber and liquid nitrile rubber 60 parts, liquid nitrile rubber 5 parts and for changing the content of the solid nitrile rubber from 40 parts to 95 parts as the rubber ingredient, the same procedure was followed as in Example 1 to obtain a cross-linkable rubber composition and the same procedure was followed to measure and evaluate it. That is, in Comparative Example 4, as the rubber ingredient, polyether rubber was not mixed and only liquid nitrile rubber and solid nitrile rubber were mixed. The results are shown in Table 1.

### [Comparative Example 5]

Except for directly charging into a Banbury mixer, instead of the mixture of polyether rubber and liquid nitrile rubber 60 parts as the rubber ingredient, the polyether rubber which was obtained in Production Example 2, 60 parts, the same procedure was followed as in Example 1 to obtain a cross-linkable rubber composition and the same procedure was followed to measure and evaluate it. That is, in Comparative Example 5, as the rubber ingredient, liquid nitrile rubber was not mixed and only polyether rubber and solid nitrile rubber were mixed. The results are shown in Table 1.

### Table 1

**Table 1**

| | | | Examples | | | | | Comparative Examples | | | | |
|---|---|---|---|---|---|---|---|---|---|---|---|---|
| | | | 1 | 2 | 3 | 4 | | 1 | 2 | 3 | 4 | 5 |
| Composition of cross-linkable rubber composition | | | | | | | | | | | | |
| | Polyether rubber | (parts) | 54 | 54 | 54 | 54 | | 54 | 54 | 95 | - | 60 |
| | Liquid nitrile rubber | (parts) | 6 | 6 | 6 | 6 | | 6 | 6 | 5 | 5 | - |
| | Solid nitrile rubber | (parts) | 40 | 40 | 40 | 40 | | 40 | 40 | - | 95 | 40 |
| | Conductive carbon black ("Ketjen Black EC300") | (parts) | 7 | 7 | 7 | 7 | | - | - | 7 | 7 | 7 |
| | Carbon black ("Asahi #35") | (parts) | - | - | - | - | | 7 | 30 | - | - | - |
| | 4,4-dithiodimorpholine | (parts) | 2 | 1 | 2 | 2 | | 2 | 2 | 2 | 2 | 2 |
| | Sulfur | (parts) | - | 0.25 | - | - | | - | - | - | - | - |
| | Tetraethylthiuram disulfide | (parts) | 1 | 1 | 0 | 1 | | 1 | 1 | 1 | 1 | 1 |
| | Dibenzothiazolyl disulfide | (parts) | 1.5 | 1.5 | 1.5 | 0 | | 1.5 | 1.5 | 1.5 | 1.5 | 1.5 |
| | Stearic acid | (parts) | 1 | 1 | 1 | 1 | | 1 | 1 | 1 | 1 | 1 |
| | Zinc oxide | (parts) | 5 | 5 | 5 | 5 | | 5 | 5 | 5 | 5 | 5 |
| | | | | | | | | | | | | |

| Evaluation | | | | | | | | | | | | |
|---|---|---|---|---|---|---|---|---|---|---|---|---|
| | Hardness | (Duro A) | 47 | 45 | 47 | 48 | | 41 | 53 | 52 | 50 | 51 |
| | Compression set | (%) | 9 | 15 | 11 | 9 | | 7 | 7 | 10 | 7 | 7 |
| | Volume resistivity value | log₁₀ (Volume resistivity value) | 4.9 | 5.0 | 4.8 | 4.4 | | 7.7 | 7.7 | 3.7 | 10.3 | 7.3 |

As shown in Table 1, cross-linked rubber which is obtained by using a cross-linkable rubber composition which contains a polyether rubber, solid nitrile, rubber, liquid nitrile rubber, sulfur-containing cross-linking agent, disulfide-based cross-linking accelerator, and predetermined conductive carbon black (average primary particle size of 50 nm less and BET specific surface area of 600 m²/g or more) was low in hardness, low in volume resistivity value and compression set, and excellent for applications for conductive rolls (Examples 1 to 4).

On the other hand, when using instead of the predetermined conductive carbon black, carbon black with a primary particle size of over 50 nm and a BET specific surface area of less than 600 m²/g, regardless of the amount of content, the obtained cross-linked rubber became higher in volume resistivity value as a result and further when the content was increased to 30 parts, the hardness became higher as a result (Comparative Examples 1 and 2).

Further, among the three types of rubber ingredients, when not mixing the solid nitrile rubber, the obtained cross-linked rubber became higher in hardness as a result (Comparative Example 3).

Furthermore, among the three types of rubber ingredients, when not mixing the polyether rubber or liquid nitrile rubber, the obtained cross-linked rubber became high in hardness and volume resistivity value as a result (Comparative Examples 4 and 5).

## Claims

1. A cross-linkable rubber composition for conductive roll comprising a polyether rubber, solid nitrile rubber, liquid nitrile rubber which has a liquid state at ordinary temperature, sulfur-containing cross-linking agent, disulfide-based cross-linking accelerator, and conductive carbon black with an average primary particle size of 50 nm or less and with a BET specific surface area of 600 m²/g or more.

2. The cross-linkable rubber composition for conductive roll according to claim 1, wherein the polyether rubber contains cross-linkable oxirane monomer units which have a vinyl group, ethylene oxide monomer units, and epihalohydrin monomer units.

3. The cross-linkable rubber composition for conductive roll according to claim 1 or 2, wherein, in the total rubber ingredients, a ratio of content of the polyether rubber is 19 to 90 wt%, a ratio of content of the solid nitrile rubber is 9 to 80 wt%, and a ratio of content of the liquid nitrile rubber is 1 to 30 wt%.

4. The cross-linkable rubber composition for a conductive roll according to any one of claims 1 to 3 wherein the sulfur-containing cross-linking agent is at least one comopound which is selected from sulfur and a sulfur-containing compound which has a morpholine structure.

5. The cross-linkable rubber composition for a conductive roll according to claim 4, wherein the sulfur-containing compound which has a morpholine structure is a compound represented by the following general formula (1). 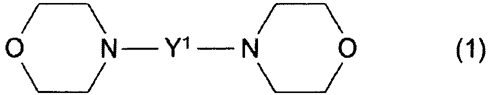 (in the general formula (1), Y¹ is a bivalent group which includes a sulfur atom)

6. The cross-linkable rubber composition for conductive roll according to any one of claims 1 to 5, wherein the disulfide-based cross-linking accelerator is at least one compound which is selected from a thiuram disulfide-based cross-linking accelerator and thiazolyl disulfide-based cross-linking accelerator.

7. A cross-linked rubber for conductive roll obtained by cross-linking the cross-linkable rubber composition according to any of claims 1 to 6.

8. A conductive roll which is comprised of the cross-linked rubber according to claim 7.

## Patentansprüche

1. Vernetzbare Kautschukzusammensetzung für leitfähige Walzen, umfassend einen Polyetherkautschuk, festen Nitrilkautschuk, flüssigen Nitrilkautschuk, der bei gewöhnlicher Temperatur einen flüssigen Zustand aufweist, Schwefel enthaltendes Vernetzungsmittel, Vernetzungsbeschleuniger auf Disulfidbasis und leitfähigen Ruß mit einer durchschnittlichen Primärteilchengröße von 50 nm oder weniger und mit einer BETspezifischen Oberfläche von 600 m²/g oder mehr.

2. Vernetzbare Kautschukzusammensetzung für leitfähige Walzen nach Anspruch 1, wobei der Polyetherkautschuk enthält: vernetzbare Oxiranmonomereinheiten, die eine Vinylgruppe aufweisen, Ethylenoxidmonomereinheiten und Epihalohydrinmonomereinheiten.

3. Vernetzbare Kautschukzusammensetzung für leitfähige Walzen nach Anspruch 1 oder 2, wobei, in den gesamten Kautschukinhaltsstoffen, ein Verhältnis des Gehalts des Polyetherkautschuks 19 bis 90 Gew.-% beträgt, ein Verhältnis des Gehalts des festen Nitrilkautschuks 9 bis 80 Gew.-% beträgt und ein Verhältnis des Gehalts des flüssigen Nitrilkautschuks 1 bis 30 Gew.-% beträgt.

4. Vernetzbare Kautschukzusammensetzung für leitfähige Walzen nach einem der Ansprüche 1 bis 3, wobei das Schwefel enthaltende Vernetzungsmittel mindestens eine Verbindung ist, die ausgewählt ist aus Schwefel und einer Schwefel enthaltenden Verbindung, die eine Morpholinstruktur aufweist.

5. Vernetzbare Kautschukzusammensetzung für leitfähige Walzen nach Anspruch 4, wobei die Schwefel enthaltende Verbindung, die eine Morpholinstruktur aufweist, eine Verbindung der folgenden allgemeinen Formel (1) ist. 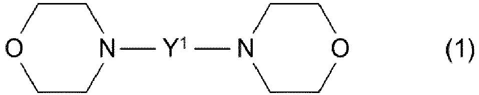 (in der allgemeinen Formel (1) ist Y¹ eine zweiwertige Gruppe, die ein Schwefelatom enthält)

6. Vernetzbare Kautschukzusammensetzung für leitfähige Walzen nach einem der Ansprüche 1 bis 5, wobei der Vernetzungsbeschleuniger auf Disulfidbasis mindestens eine Verbindung ist, die ausgewählt ist aus einem Vernetzungsbeschleuniger auf Thiuramdisulfidbasis und einem Vernetzungsbeschleuniger auf Thiazolyldisulfidbasis.

7. Vernetzter Kautschuk für leitfähige Walzen, erhalten durch Vernetzen der vernetzbaren Kautschukzusammensetzung nach einem der Ansprüche 1 bis 6.

8. Leitfähige Walze, welche aus dem vernetzten Kautschuk nach Anspruch 7 besteht.

## Revendications

1. Composition de caoutchouc réticulable pour rouleau conducteur comprenant un caoutchouc de polyéther, un caoutchouc nitrile solide, un caoutchouc nitrile liquide qui présente un état liquide à température ordinaire, un agent de réticulation contenant du soufre, un accélérateur de réticulation à base de disulfure, et un noir de carbone conducteur ayant une taille particulaire primaire moyenne de 50 nm ou moins et ayant une surface spécifique BET de 600 m²/g ou plus.

2. Composition de caoutchouc réticulable pour rouleau conducteur selon la revendication 1, dans laquelle le caoutchouc de polyéther contient des motifs monomères d'oxirane réticulables qui contiennent un groupe vinyle, des motifs monomères d'oxyde d'éthylène, et des motifs monomères d'épihalohydrine.

3. Composition de caoutchouc réticulable pour rouleau conducteur selon la revendication 1 ou 2, dans laquelle, dans les ingrédients de caoutchoucs totaux, un rapport de teneur du caoutchouc de polyéther est de 19 à 90 % en poids, un rapport de teneur du caoutchouc nitrile solide est de 9 à 80 % en poids, et un rapport de teneur du caoutchouc nitrile liquide est de 1 à 30 % en poids.

4. Composition de caoutchouc réticulable pour rouleau conducteur selon l'une quelconque des revendications 1 à 3 dans laquelle l'agent de réticulation contenant du soufre est au moins un composé qui est sélectionné parmi le soufre et un composé contenant du soufre qui possède une structure de morpholine.

5. Composition de caoutchouc réticulable pour rouleau conducteur selon la revendication 4, dans laquelle le composé contenant du soufre qui possède une structure de morpholine est un composé représenté par la formule générale (1) suivante. 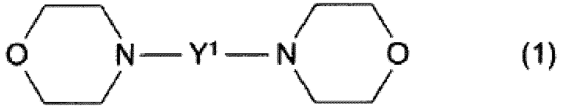 (dans la formule générale (1), Y¹ est un groupe bivalent qui comprend un atome de soufre)

6. Composition de caoutchouc réticulable pour rouleau conducteur selon l'une quelconque des revendications 1 à 5, dans laquelle l'accélérateur de réticulation à base de disulfure est au moins un composé qui est sélectionné parmi un accélérateur de régulation à base de disulfure de thiurame et un accélérateur de réticulation à base de disulfure de thiazolyle.

7. Caoutchouc réticulé pour rouleau conducteur obtenu par la réticulation de la composition de caoutchouc réticulable selon l'une quelconque des revendications 1 à 6.

8. Rouleau conducteur qui est composé du caoutchouc réticulé selon la revendication 7.
